# EUROPÄISCHE PATENTANMELDUNG

(11) **EP 3 522 135 A1**
(43) Veröffentlichungstag der Anmeldung: **07.08.2019**
(21) Anmeldenummer: 19151068.4
(22) Anmeldetag: 10.01.2019
(51) Int. Cl.: G08G 1/16, B60W 40/04, G06N 3/08, G10L 25/51, G10L 25/30, B60Q 1/52, B60R 21/013, G06N 3/02, G06K 9/00, G07C 5/08, G08B 21/02, G07C 5/00, B60W 30/08, G08B 31/00

(54) **DETEKTION VON GEFAHRENGERÄUSCHEN**

(30) Priorität: 19.01.2018 DE 102018200878
(71) Anmelder: ZF Friedrichshafen AG, 88046 Friedrichshafen (DE)
(72) Erfinder: LOVISON, Debora, 88046 Friedrichshafen (DE); ADE, Florian, 88085 Langenargen (DE); FIERES, Julian, 97422 Schweinfurt (DE); HANSON, Lucas, Belle Harbor, NY, 11694 (US); PETRICH, Anja, 88079 Kressbronn-Gohren (DE)

(57) **Zusammenfassung**

Trainingssystem (10) für eine Fahrzeugsteuerung zum Detektieren von Gefahrengeräuschen, insbesondere Unfallgeräuschen mit wenigstens einer Schnittstelle (12), um Trainingsdaten (14), welche jeweils ein Audiosignal (16) und ein Soll-Reaktionssignal (18) aufweisen, zu erhalten, einer Auswerteeinheit (20), welche ein künstliches neuronales Netzwerk (22) bildet und eingerichtet ist, das künstliche neuronale Netzwerk (22) mit Trainingsdaten (14) vorwärtszuspeisen, um Ist-Reaktionssignale (24) zu ermitteln, und Gewichte durch Rückwärtsspeisen der Soll-Reaktionssignale (18) in dem künstlichen neuronalen Netzwerk (22) zu ermitteln, wobei die Gewichte eingerichtet sind, in der Fahrzeugsteuerung zum Detektieren von Unfallgeräuschen gespeichert zu werden.

## Beschreibung

### GEBIET DER ERFINDUNG

Die vorliegende Erfindung betrifft ein Trainingssystem für eine Fahrzeugsteuerung zum Detektieren von Gefahrengeräuschen sowie ein Verfahren zum Trainieren eines künstlichen neuronalen Netzwerks einer Fahrzeugsteuerung, eine Fahrzeugsteuerung zum Detektieren von Gefahrengeräuschen in Fahrsituationen, ein Fahrzeug mit einer Fahrzeugsteuerung und ein Computerprogrammprodukt.

### TECHNISCHER HINTERGRUND

Die DE 19828409 B4 zeigt eine Unfallgeräusche-Detektionsschaltung.

### ZUSAMMENFASSUNG DER ERFINDUNG

Davon ausgehend liegt der Erfindung die Aufgabe zugrunde, die Detektion von Gefahrengeräuschen in Fahrsituationen weiter zu verbessern. Ferner sollen die gewonnenen Informationen für eine Fahrzeugsteuerung nutzbar gemacht werden.

Erfindungsgemäß wird diese Aufgabe durch ein Trainingssystem für eine Fahrzeugsteuerung mit den Merkmalen des Patentanspruchs 1 bzw. durch ein Verfahren zum Trainieren eines künstlichen neuronalen Netzwerks gemäß dem Patentanspruch 8 gelöst.

Demgemäß ist vorgesehen:
ein Trainingssystem für eine Fahrzeugsteuerung zum Detektieren von Gefahrengeräuschen, insbesondere Unfallgeräuschen, mit
- wenigstens einer Schnittstelle, um Trainingsdaten, welche jeweils ein Audiosignal und ein Soll-Reaktionssignal aufweisen, zu erhalten,
- einer Auswerteeinheit, welche ein künstliches neuronales Netzwerk bildet.
Die Auswerteeinheit ist eingerichtet, das künstliche neuronale Netzwerk mit Trainingsdaten vorwärtszuspeisen, um Ist-Reaktionssignale zu ermitteln, und eine veränderte Topologie, insbesondere Gewichte, durch Rückwärtsspeisen der Soll-Reaktionssignale in dem künstlichen neuronalen Netzwerk zu ermitteln. Die Topologie wird in der Fahrzeugsteuerung zum Detektieren von Unfallgeräuschen gespeichert.

Ferner ist vorgesehen:
ein Verfahren zum Trainieren eines künstlichen neuronalen Netzwerks einer Fahrzeugsteuerung mit den folgenden Schritten:
- Bereitstellen von wenigstens einem Paar aus einem Audiosignal und einem Soll-Reaktionssignal;
- Vorwärtsspeisen des künstlichen neuronalen Netzwerks mit dem wenigstens einem Audiosignal;
- Ermitteln eines Ist-Reaktionssignals aufgrund des Vorwärtsspeisens;
- Rückwärtsspeisen des künstlichen neuronalen Netzwerks aufgrund eines Unterschieds zwischen dem Ist-Reaktionssignal und dem Soll-Reaktionssignal.

Das Rückwärtsspeisen umfasst das Ermitteln einer veränderten Topologie des KNN, insbesondere von Gewichten, um die Ermittlung von Ist-Reaktionssignalen aufgrund des Vorwärtsspeisens zu verbessern.

Fahrzeuge im Sinne dieser Patentanmeldung sind motorgetriebene Landfahrzeuge.

Eine Schnittstelle ist eine Einrichtung zwischen wenigstens zwei Funktionseinheiten, an der ein Austausch von logischen Größen, z.B. Daten, oder physikalischen Größen, z.B. elektrischen Signalen, erfolgt, entweder nur unidirektional oder bidirektional. Der Austausch kann analog oder digital erfolgen. Der Austausch kann ferner drahtgebunden oder drahtlos erfolgen.

Eine Steuerung ist ein elektronisches Modul zur Steuerung oder Regelung. Steuerungen werden im Kfz-Bereich in allen erdenklichen elektronischen Bereichen eingesetzt, ebenso zur Steuerung von Maschinen, Anlagen und sonstigen technischen Prozessen.

Eine Auswerteeinheit ist eine Vorrichtung, die eingehende Informationen verarbeitet und ein aus dieser Verarbeitung resultierendes Ergebnis ausgibt. Elektronische Schaltungen wie z.B. zentrale Prozessoreinheiten oder Grafikprozessoren sind Auswerteeinheiten.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt.

Ein künstliches neuronales Netzwerk (KNN, englisch artificial neural network - ANN) ist insbesondere ein in einem Rechenprogramm nachgebildetes Netzwerk aus vernetzten künstlichen Neuronen. Die künstlichen Neuronen sind dabei typischerweise auf verschiedenen Schichten (layers) angeordnet. Üblicherweise umfasst das künstliche neuronale Netzwerk eine Eingangsschicht und eine Ausgabeschicht (output layer), deren Neuronenausgabe als einzige des künstlichen neuronalen Netzwerks sichtbar wird. Zwischen der Eingangsschicht und der Ausgabeschicht liegende Schichten werden typischerweise als verdeckte Schichten (hidden layer) bezeichnet. Typischerweise wird zunächst eine Architektur bzw. Topologie eines künstlichen neuronalen Netzwerks initiiert und dann in einer Trainingsphase für eine spezielle Aufgabe oder für mehrere Aufgaben in einer Trainingsphase trainiert.

Der Begriff "Topologie eines KNN" umfasst sämtlich Aspekte bezüglich des Aufbaus eines KNN. Hierunter fallen beispielsweise die Anzahl der Neuronen des KNN, die Aufteilung der Neuronen auf die einzelnen Schichten des KNN, die Anzahl der Schichten eines KNN, die Vernetzung der Neuronen und die Gewichtung der Vernetzung.

Das Training des künstlichen neuronalen Netzwerks umfasst dabei typischerweise eine Veränderung eines Gewichts einer Verbindung zwischen zwei künstlichen Neuronen des künstlichen neuronalen Netzwerks. Das Gewicht enthält Information zur Stärke der Berücksichtigung eines Eingangs eines Neurons. Das Training des künstlichen neuronalen Netzwerks kann auch eine Entwicklung von neuen Verbindungen zwischen künstlichen Neuronen, ein Löschen von bestehenden Verbindungen zwischen künstlichen Neuronen, ein Anpassen von Schwellwerten der künstlichen Neuronen und/oder ein Hinzufügen oder ein Löschen von künstlichen Neuronen umfassen.

Ein Beispiel für ein künstliches neuronales Netzwerk ist ein flaches künstliches neuronales Netzwerkwerk (shallow neural network), welches oft nur eine einzelne verdeckte Schicht zwischen der Eingabeschicht und der Ausgabeschicht enthält und damit relativ einfach zu trainieren ist. Ein weiteres Beispiel ist ein tiefes künstliches neuronales Netzwerkwerk (deep neural network), welches zwischen der Eingangsschicht und der Ausgabeschicht mehrere verschachtelte verdeckte Schichten von künstlichen Neuronen enthält. Das tiefe künstliche neuronale Netzwerk ermöglicht dabei eine verbesserte Erkennung von Mustern und komplexen Zusammenhängen

Beispielsweise kann das künstliche neuronale Netzwerk ein ein- bzw. mehrschichtiges feedforward-Netzwerk oder eine rekurrentes Netzwerk sein. Feedforward-Netzwerke weisen Neuronen auf, die ausschließlich vorwärtsgespeist werden, d.h. ein Neuron wird ausschließlich von höher liegenden Schichten gespeist.

Ein rekurrentes Netzwerk weist bidirektional verbundene Neuronen auf, d.h. ein Neuron wird zudem von tiefer liegenden Schichten gespeist. Somit lässt sich bei einem späteren Durchlauf des KNN Information aus eine früheren Durchlauf berücksichtigen, wodurch ein Erinnerungsvermögen geschaffen wird.

Ein Trainingssystem ist eine Recheneinheit, auf welcher ein KNN trainiert wird.

Trainingsdaten sind in dieser Anmeldung Datenpaare aus Eingangsdaten, die von dem KNN zu verarbeiten sind, sowie Soll-Ergebnisdaten, die von dem KNN zu ermitteln sind. Während des Trainings wird das KNN aufgrund eines Vergleichs von Soll-Ergebnisdaten mit dem von dem KNN ermittelten Ist-Ergebnisdaten angepasst, wodurch sich ein Trainingseffekt einstellt.

Die Eingangsdaten, mit welchen das KNN in dieser Anmeldung gespeist wird, sind Geräusche bzw. Audiosignale, die Geräusche kodieren. Die Eingangsdaten können Gefahrengeräusche, z.B. Bremsgeräusche, oder gewöhnliche Umgebungsgeräusche, die von Gefahrengeräuschen zu unterscheiden sind, enthalten.

Ein Audiosignal ist ein elektrisches Signal, das akustische Informationen transportiert.

Aus Ist-Ergebnisdaten lässt sich ein Ist-Reaktionssignal ableiten. Aus Soll-Ergebnisdaten lässt sich ein Soll-Reaktionssignal ableiten.

Die Mikrofone, die eingerichtet sind, zu einer Fahrsituation korrespondierende Geräusche zu empfangen, sind Mikrofone, die für automobile Anwendungen geeignet sind, das heißt insbesondere entsprechend witterungsbeständig und funktionssicher sind. Vorzugweise weisen diese Mikrofone Filter und/oder Verstärker auf, um für die zu der Fahrsituation korrespondierenden Geräusche sensitiver zu sein als für andere Geräusche. Vorzugsweise sind an jeder Seite des Straßenfahrzeuges, also vorne, hinten, links und rechts, jeweils wenigstens ein Mikrofon angeordnet, das heißt eine bestimmte Anordnung von Mikrofonen. Vorzugsweise sind die jeweiligen Mikrofone Richtmikrofone.

Ein Richtmikrofon nimmt primär den frontal eintreffenden Schall auf und weist dadurch eine Richtcharakteristik auf. Schall aus anderen Richtungen wird gedämpft aufgenommen. Der aufgenommene Schall wird in elektrische Signale umgesetzt.

Eine Fahrsituation ist jede Situation mit Beteiligung von einem Fahrzeug.

Die grundlegende Idee der Erfindung ist es, eine Fahrzeugsteuerung mittels einem KNN zur Detektion von Gefahrengeräuschen in der Fahrzeugumgebung derart zu trainieren, dass ein Fahrzeugführer zuverlässig vor bevorstehenden Gefahrensituationen gewarnt werden kann.

Typische Gefahrengeräusche sind beispielsweise Geräusche von Zusammenstößen unter Beteiligung eines Fahrzeugs, Bremsgeräusche wie sie etwa bei einer Vollbremsung entstehen oder Bremsgeräusche wie sie auf glatter Fahrbahn, sogenanntes Bremsstottern, entstehen.

Zwar lassen sich Gefahrensituationen häufig auch optisch erkennen, jedoch sind Situationen bekannt, in welchen eine optische Detektion einer Gefahrensituation nicht möglich ist, beispielsweise wenn sich die Gefahrensituation hinter einer Kurve befindet, bei Nebel oder weil die Gefahrensituation besser hörbar als sichtbar ist. Beispielsweise ist eine Vollbremsung oft unverzüglich hörbar, wohingegen ein nachfolgender Fahrer, der die Bremsgeräusche möglicherweise überhört, aufgrund seiner optischen Wahrnehmung erst deutlich später erkennt, dass ein vorausfahrendes Fahrzeug eine Vollbremsung eingelegt hat.

Diese Anmeldung bezieht sich auf verschiedene Fahrzeuge, die zueinander in Beziehung stehen. Fahrzeuge, die eine erfindungsgemäße Fahrzeugsteuerung aufweisen, werden im Folgenden als Ego-Fahrzeug bezeichnet. Fahrzeuge die dem Ego-Fahrzeug nach- oder vorausfahren werden als Fremdfahrzeug bezeichnet.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Weiterbildung der Erfindung weist das Trainingssystem wenigstens ein Mikrofon auf. Das Trainingssystem kann insbesondere eine Vielzahl von Richtmikrofonen aufweisen. Diese können beispielsweise in einem Array angeordnet sein. Das Mikrofon ist eingerichtet, zu einer Fahrsituation korrespondierende Geräusche zu empfangen.

Somit lassen sich Umgebungsgeräusche bezüglich eines Fahrzeugs zielgerichtet erfassen, indem Eigengeräusche des Fahrzeugs gedämpft werden.

Gemäß einer bevorzugten Weiterbildung der Erfindung weist das Audiosignal akustische Informationen zu einem Bremsgeräusch eines Fremdfahrzeugs auf. Dementsprechend kann vorgesehen sein, Gefahrensituationen von vorausfahrenden Fahrzeugen zu erfassen, auch wenn diese Gefahrensituationen nicht in einem Unfall resultieren. Auf diese Weise lässt sich beispielsweise eine Vollbremsung eines vorausfahrenden Fahrzeugs frühzeitig erkennen und ein Auffahrunfall auf dieses vorausfahrende Fahrzeug verhindern. Ferner lässt sich aufgrund von charakteristischen Bremsgeräuschen frühzeitig erkennen, wenn ein vorausfahrendes Fahrzeug auf glatter Fahrbahn, beispielsweise bei Schnee oder Eis, bremst. Die Information über die bevorstehende, möglicherweise unerwartete, glatte Fahrbahn lässt sich somit an das Ego-Fahrzeug mit einer Bremsgeräusche detektierenden Fahrzeugsteuerung übermitteln.

Alternativ oder zusätzlich ist es vorteilhaft, wenn das Audiosignal akustische Informationen zu einer Kollision eines Fremdfahrzeugs mit einem weiteren Objekt aufweist. Eine Kollision kann sich z.B. zwischen mehreren Fahrzeugen, zwischen einem Fahrzeug und einer Person, zwischen einem Fahrzeug und einem passiven Gegenstand, etwa einer Leitplanke, ergeben.

Gemäß einer bevorzugten Weiterbildung der Erfindung weist das Soll-Reaktionssignal der Trainingsdaten ein Warnsignal, welches an einen Fahrer des Ego-Fahrzeugs gerichtet ist, auf.

Dabei ist es vorteilhaft, wenn das Warnsignal als haptisches, optisches oder Audio-Warnsignal ausgebildet ist. Haptische Warnsignale können beispielsweise Vibrationssignale, mit welchen Gegenstände, mit denen ein Fahrer in Berührung ist, beaufschlagt werden. Beispielsweise lässt sich ein Lenkrad oder ein Bereich eines Fahrersitzes mit einem Vibrationssignal beaufschlagen. Alternativ oder zusätzlich kann das Warnsignal als optisches Signal, welches auf einem Display, zum Beispiel auf einem Head-Up-Display, angezeigt wird, ausgebildet sein. Weiter alternativ oder zusätzlich sind auch Audio-Warnsignale, also Töne, denkbar.

Dabei ist es ferner vorteilhaft, wenn das Soll-Reaktionssignal zwei Warnsignale aufweist, wobei sich ein erstes Warnsignal an den Fahrer des Ego-Fahrzeugs richtet. Ein zweites Warnsignal kann sich an einen Fahrer eines nachfolgenden Fremdfahrzeugs richten, beispielsweise indem eine optische Warnung auf einer Rückseite des Ego-Fahrzeugs angezeigt wird. Als Anzeigeflächen für Warnungen an einen Fahrer eines nachfolgenden Fahrzeugs sind beispielsweise Rückscheiben oder Karosserieteile des Ego-Fahrzeugs denkbar.

Somit lässt sich verhindern, dass ein nachfolgendes Fahrzeug von einer möglicherweise bevorstehenden Bremsung des Ego-Fahrzeugs überrascht wird und dem Ego-Fahrzeug auffährt.

Ferner sind Fahrzeugsteuerungen zum Detektieren von Gefahrengeräuschen mit einer Auswerteeinheit, die von einem erfindungsgemäßen Verfahren trainiert wurde, vorteilhaft. Ferner weist eine dementsprechende Fahrzeugsteuerung zum Detektieren von Gefahrengeräuschen in Fahrsituationen wenigstens ein Mikrofon, vorzugsweise ein Richtmikrofon, zum Empfangen von Fahrsituationsgeräuschen auf.

Ferner sind Fahrzeuge mit einer derartigen Fahrzeugsteuerung vorteilhaft, wenn das Fahrzeug wenigstens ein Mittel zur Ausgabe eines Warnsignals aufweist. Das Mittel kann als Display, als Projektor, welcher ein optisches Signal auf eine Front- und/oder Rückscheibe projiziert, als Vibrationsgeber zur Beaufschlagung eines Lenkrads mit einer Vibration und als Lautsprecher ausgebildet sein.

Ferner sind Computerprogrammprodukte mit Programmcode-Mitteln, um das erfindungsgemäße Verfahren zum Trainieren eines künstlichen neuronalen Netzwerks durchzuführen, vorteilhaft.

Das Computerprogrammprodukt gemäß einer Ausführungsform der Erfindung führt die Schritte eines Verfahrens gemäß der vorangehenden Beschreibung aus, wenn das Computerprogrammprodukt auf einem Computer, insbesondere einem fahrzeuginternen Computer, läuft. Wenn das betreffende Programm auf einem Computer zum Einsatz kommt, ruft das Computerprogrammprodukt einen Effekt hervor, nämlich maschinelles Lernen bzw. Trainieren eines KNN zum Detektieren von Gefahrengeräuschen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Figur 1: ein Blockschaltbild einer Ausführungsform der Erfindung;
- Figur 2: ein Blockschaltbild einer Ausführungsform der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleichwirkende Elemente, Merkmale und Komponenten - sofern nicht anders ausgeführt ist - jeweils mit denselben Bezugszeichen versehen.

### BESCHREIBUNG VON AUSFÜHRUNGSBEISPIELEN

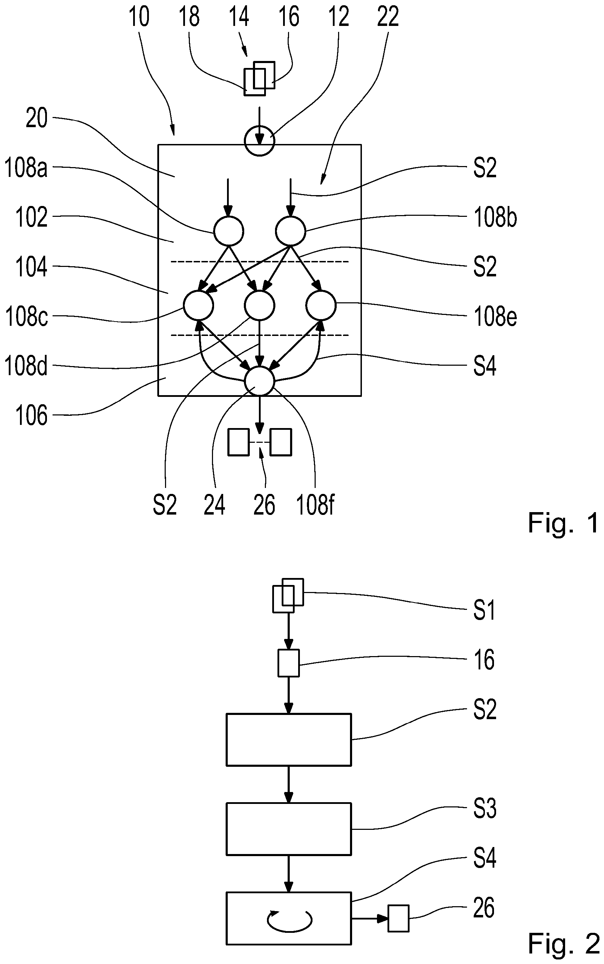

Figur 1 zeigt ein Blockschaltbild eines Trainingssystems 10 gemäß einer Ausführungsform der Erfindung. Das Trainingssystem 10 umfasst eine Schnittstelle 12 sowie eine Auswerteeinheit 20 mit einem KNN 22. Das KNN 22 umfasst mehrere Neuronen, die in Figur 1 vereinfacht mit 108a-f dargestellt sind. Dabei bilden die Neuronen 108a, b eine Eingangsschicht 102, die Neuronen 108c, d, e bilden eine verdeckte Schicht 104 und das Neuron 108f bildet eine Ausgabeschicht 106.

Die Neuronen 108a, b der Eingangsschicht 102 werden über die Schnittstelle 12 mit einem Audiosignal 16 vorwärtsgespeist. Das Audiosignal 16 wird in den Neuronen 108a, b der Eingangsschicht mit Initialgewichten gewichtet. Dabei kann vorgesehen sein, dass das Audiosignal 16 in mehrere Signalanteile zerlegt wird und die Signalanteile gewichtet werden. Es kann vorgesehen sein, dass auf die gewichteten Eingangsdaten eine oder mehrere Funktionen angewendet werden. Die Auswertung der Funktion bildet den Ausgabewert eines Neurons 108a, b, der an die Neuronen 108c, d, e der nächst tieferen Schicht, also der verdeckten Schicht 104, als Eingangswerte übergeben werden. Es kann vorgesehen sein, dass die verdeckte Schicht 104 mehrere Schichten aufweist.

Ähnlich wie in der Eingangsschicht 102 werden die an die Neuronen 108c, d, e der verdeckten Schicht übergebenen Eingangswerte gewichtet und eine oder mehrere Funktionen wird auf die gewichteten Eingangswerte angewendet. Die Auswertung der Funktionen, die auf die gewichteten Eingangswerte angewendet wird, bilden die Ausgangswerte der Neuronen 108c, d, e. Diese Ausgangswerte werden an die Neuronen der Ausgabeschicht 106 als Eingangswerte übergeben. In Figur 1 sind die Neuronen der Ausgabeschicht 106 beispielhaft als ein Neuron 108f dargestellt. Das Neuron 108f errechnet aus den Eingabewerten, die von den Neuronen 108c, d, e der verdeckten Schicht 104 übergeben wurden, unter Gewichtung der Eingabewerte und unter Anwendung einer oder mehrerer Funktionen auf die gewichteten Eingabewerte einen Ausgangswert. Von diesem Ausgangswert lässt sich ein Ist-Reaktionssignal 24 ableiten. Dieser Ablauf wird auch als Vorwärtsspeisen eines KNN bezeichnet.

In einem nächsten Schritt wird das Ist-Reaktionssignal 24 mit dem Soll-Reaktionssignal 18, welches der Auswerteeinheit 20 über die Schnittstelle 12 übergeben wurde, verglichen.

Im nächsten Schritt wird die Topologie der einzelnen Schichten 102, 104, 106 des KNN 22 derart angepasst, dass das KNN 22 für das übergebene Audiosignal 16 das Soll-Reaktionssignal 18 errechnet. Die Anpassung der Topologie 26 kann dabei eine Veränderung der Gewichte, das Hinzufügen von Verbindungen zwischen Neuronen, das Entfernen von Verbindungen zwischen Neuronen und/oder das Verändern von Funktionen, die auf gewichtete Eingangswerte angewendet werden, umfassen. Dieser Ablauf wird auch als Rückwärtsspeisen eines KNN bezeichnet.

Die Figur 2 zeigt ein Blockschaltbild eines Verfahrens zum Trainieren eines KNN gemäß einer Ausführungsform der Erfindung. Das Verfahren umfasst die Schritte S1-S4.

In dem Schritt S1 wird ein Signalpaar aus einem Audiosignal 16 und einem Soll-Reaktionssignal 18 bereitgestellt.

In dem Schritt S2 wird das KNN 22 mit dem Audiosignal 16 vorwärtsgespeist.

In dem Schritt S3 wird ein Ist-Reaktionssignal 24 aufgrund des Vorwärtsspeisens S2 ermittelt.

In dem Schritt S4 wird das künstliche neuronale Netzwerk 22 aufgrund eines Unterschieds zwischen dem Ist-Reaktionssignal 24 und dem Soll-Reaktionssignal 18 rückwärtsgespeist. Dabei wird eine veränderte Topologie 26 des KNN, insbesondere Gewichte, um die Ermittlung von Ist-Reaktionssignalen aufgrund des Vorwärtsspeisens zu verbessern, ermittelt.

### Bezugszeichen

- 10: Trainingssystem
- 12: Schnittstelle
- 14: Trainingsdaten
- 16: Audiosignal
- 18: Soll-Reaktionssignal
- 20: Auswerteeinheit
- 22: künstliches neuronales Netzwerk
- 24: Ist-Reaktionssignal
- 26: Topologie

- 102: Eingangsschicht
- 104: verdeckte Schicht
- 106: Ausgabeschicht
- 108a-f: Neuronen

- S1-S4: Verfahrensschritte

## Patentansprüche

1. Trainingssystem (10) für eine Fahrzeugsteuerung zum Detektieren von Gefahrengeräuschen, insbesondere Unfallgeräuschen, mit
- wenigstens einer Schnittstelle (12), um Trainingsdaten (14), welche jeweils ein Audiosignal (16) und ein Soll-Reaktionssignal (18) aufweisen, zu erhalten,
- einer Auswerteeinheit (20), welche ein künstliches neuronales Netzwerk (22) bildet und eingerichtet ist,
das künstliche neuronale Netzwerk (22) mit Trainingsdaten (14) vorwärtszuspeisen, um Ist-Reaktionssignale (24) zu ermitteln, und
eine veränderte Topologie (26) des künstlichen Neuronalen Netzwerks (22), insbesondere Gewichte, durch Rückwärtsspeisen der Soll-Reaktionssignale (18) in dem künstlichen neuronalen Netzwerk (22) zu ermitteln,
wobei die Topologie (26) eingerichtet ist, in der Fahrzeugsteuerung zum Detektieren von Gefahrengeräuschen gespeichert zu werden.

2. Trainingssystem nach Anspruch 1, welches wenigstens ein Mikrophon, insbesondere eine Vielzahl von Richtmikrophonen, aufweist, wobei das Mikrophon eingerichtet ist, zu einer Fahrsituation korrespondierende Geräusche zu empfangen.

3. Trainingssystem nach einem der vorstehenden Ansprüche, wobei das Audiosignal (16) akustische Informationen zu einem Bremsgeräusch eines Fahrzeugs und/oder zu einer Kollision eines Fahrzeugs mit einem weiteren Objekt aufweist.

4. Trainingssystem nach einem der vorstehenden Ansprüche wobei ein Soll-Reaktionssignal (18) der Trainingsdaten (14) ein Warnsignal, welches an einen Fahrer gerichtet ist, aufweist.

5. Trainingssystem nach Anspruch 4, wobei das Warnsignal als haptisches, optisches oder Audio-Warnsignal ausgebildet ist.

6. Trainingssystem nach Anspruch 4 oder 5, wobei das Soll-Reaktionssignal (18) zwei Warnsignale aufweist, insbesondere ein erstes Warnsignal, welches sich an den Fahrer eines Ego-Fahrzeugs richtet, sowie ein zweites Warnsignal, welches sich an den Fahrer eines Fremdfahrzeugs richtet.

7. Trainingssystem nach Anspruch 6, wobei das zweite Warnsignal als optisches Signal ausgebildet ist.

8. Verfahren zum Trainieren eines künstlichen neuronalen Netzwerks (22) einer Fahrzeugsteuerung mit den folgenden Schritten:
- Bereitstellen (S1) von wenigstens einem Paar aus einem Audiosignal und einem Soll-Reaktionssignal (18);
- Vorwärtsspeisen (S2) des künstlichen neuronalen Netzwerks mit dem wenigstens einem Audiosignal (16);
- Ermitteln (S3) eines Ist-Reaktionssignals (24) aufgrund des Vorwärtsspeisens (S2);
- Rückwärtsspeisen (S4) des künstlichen neuronalen Netzwerks aufgrund eines Unterschieds zwischen dem Ist-Reaktionssignal (24) und dem Soll-Reaktionssignal (18).

9. Fahrzeugsteuerung zum Detektieren von Gefahrengeräuschen in Fahrsituationen, insbesondere Unfallgeräuschen, mit
wenigstens einem Mikrophon, vorzugsweise Richtmikrophon, zum Empfangen von Fahrsituationsgeräuschen und
einer Auswerteeinheit (20), die eingerichtet ist, ein gemäß dem Verfahren nach Anspruch 8 trainiertes künstliches neuronales Netzwerk (22) mit den Fahrsituationsgeräuschen vorwärtszuspeisen, um den Fahrsituationsgeräuschen ein Reaktionssignal (24) zuzuordnen.

10. Fahrzeug mit einer Fahrzeugsteuerung nach Anspruch 9, wobei das Fahrzeug wenigstens ein Mittel zur Ausgabe eines Warnsignals aufweist, wobei das Mittel insbesondere als Display, als Projektor, welcher ein optisches Signal auf eine Front- und/oder Rückscheibe projiziert, als Vibrationsgeber zur Beaufschlagung eines Lenkrads mit einer Vibration und/oder als Lautsprecher ausgebildet ist.

11. Computerprogrammprodukt mit Programmcode-Mitteln, um das Verfahren gemäß dem Anspruch 8 durchzuführen.
